# EUROPÄISCHE PATENTSCHRIFT

(11) **EP 2 906 334 B1**
(45) Veröffentlichungstag und Bekanntmachung des Hinweises auf die Patenterteilung: **27.03.2019**
(21) Anmeldenummer: 13783836.3
(22) Anmeldetag: 11.10.2013
(51) Int. Cl.: B01F 5/06, B01F 7/00, B01F 15/00, B01F 13/10, B29B 7/40

(54) **MISCHEREINSATZ**
MIXER INSERT
ÉLÉMENT MÉLANGEUR

(30) Priorität: 11.10.2012 DE 102012019927
(43) Veröffentlichungstag der Anmeldung: 19.08.2015
(73) Patentinhaber: Tartler, Udo, 64750 Lützelbach/Haingrund (DE)
(72) Erfinder: Tartler, Udo, 64750 Lützelbach/Haingrund (DE)
(74) Vertreter: Hoffmann Eitle
(86) Internationale Anmeldenummer: PCT/EP2013/003060
(87) Internationale Veröffentlichungsnummer: WO 2014/056619

(56) Entgegenhaltungen:
- EP-A1- 1 754 530
- US-A- 4 123 178
- US-A- 4 370 062
- US-A- 4 878 624

## Beschreibung

Die vorliegende Erfindung betriffteinen Mischereinsatz, der Verwirbelungselemente und für die Verwirbelungselemente ein Trägerstabelement aufweist und der zum Einsatz in eine rohrförmige Durchleitung angepasst ist, die mit mindestens zwei Komponenten-Zuleitungen einer Vorrichtung zum Mischen mindestens zweier fluider Komponenten in Leitungsverbindung steht, wobei die Verwirbelungselemente an das Trägerstabelement montiert sind, wobei mindestens eines der Verwirbelungselemente am Trägerstabelement drehfest angebracht ist, wobei mindestens eines der Verwirbelungselemente sich nicht mit dem Trägerstabelement mitdreht, sondern zum drehfesten Einsatz in die rohrförmige Durchleitung angepasst ist.

Zum Herstellen von Kunststoff (nur zum Beispiel etwa vor dem Einleiten von Kunststoff in den Anguss einer Gussform) werden bei einigen Kunststoffen mindestens zwei fluide Komponenten so mit einander vermischt, dass sich das entstandene insbesondere flüssige oder pastöse Gemisch vernetzt und (gegebenenfalls in der Gussform) "aushärtet". Das Einleiten in die Gussform oder zum Beispiel auch das Aufbringen auf ein Fasergelege oder -gewebe zum Herstellen von GFK oder CFK erfolgt verbreitet durch eine rohrförmige Durchleitung (Mischer) mit Formelementen (Verwirbelungselementen) in ihrem Innenraum, die hindurchströmendes Fluid verschiedentlich um-, ablenken, lokal stauen, Turbulenzen erzeugen und/oder verwirbeln und somit durchmischen. In diesen Mischer hinein führen bekanntlich Zuleitungen insbesondere in der Anzahl der fluiden Komponenten, aus denen der Kunststoff zusammenzumischen ist.

So wird das Vermischen der Komponenten so spät wie möglich zum Beispiel vor dem Einleiten in die Gussform oder dem Aufbringen auf das Gelege oder Gewebe gewährleistet. Dies ermöglicht die Verwendung auch von Kunststoff mit kurzer "Topfzeit", Kunststoff also, der schon kurze Zeit nach dem Vermischen vernetzt und dadurch schnell an Fließfähigkeit (Viskosität) verliert, die er zum Beispiel braucht, um die Gussform vollständig auszufüllen oder das Gelege oder Gewebe vollständig zu durchtränken.

Das EP 1 754 530 zeigt in seinem Ausführungsbeispiel einen Mischereinsatz mit den eingangs zusammengestellten Merkmalen.

Der vorliegenden Erfindung liegt die Aufgabe zu Grunde, einen Mischereinsatz für einen Mischer zu schaffen, dessen Handhabung verbessert ist.

Diese Aufgabe wird von einem Mischereinsatz mit den Merkmalen des Anspruchs 1 gelöst. Bevorzugte Ausgestaltungen sind in den Unteransprüchen angegeben.

Ein erfindungsgemäßer Mischereinsatz weist ein (vorzugsweise längliches und/oder gerades, insbesondere zylindrisches) Trägerstabelement und Verwirbelungselemente auf. Vorzugsweise hat mindestens ein Verwirbelungselement eine Fluid-Schaufel, die ausgerichtet ist, Fluid spiralförmig (insbesondere in axialer Richtung des Trägerstabelements) um das Trägerstabelement herum zu leiten, und vorzugsweise haben mindestens zwei Verwirbelungselemente je eine Fluid-Schaufel, die ausgerichtet sind, Fluid spiralförmig in zueinander entgegengesetzter Richtung um das Trägerstabelement herum zu leiten.

Erfindungsgemäß sind die Verwirbelungselemente an das Trägerstabelement montierbar.

Durch diese Montierbarkeit einzelner Verwirbelungselemente an das Trägerstabelement lassen sich erfindungsgemäß Mischereinsätze zusammensetzen, die an die jeweilige "Mischaufgabe" zum Beispiel strömungsmechanisch, aber zum Beispiel auch durch geeignete Auswahl des Werkstoffs der Mischerelemente, angepasst sind. Die Montierbarkeit bietet sich zum Beispiel dem Anwender, der zum Beispiel aus einem System oder Baukasten verschiedener Verwirbelungselemente einen geeigneten Mischereinsatz für seine bevorstehende "Mischaufgabe" zusammensetzen möchte. Die Verwirbelungselemente sind dabei an ein, oder vorzugsweise sogar mehrere verschiedene zum Beispiel in dem System oder Baukasten zur Auswahl stehende Trägerstabelemente und/oder Durchleitungen angepasst montierbar.

Die Montierbarkeit einzelner Verwirbelungselemente ermöglicht (da die Verwirbelungselemente erfindungsgemäß auch wieder demontierbar sein können) auch deren Reparaturaustausch, wenn bei einem (mehrfach zu verwendenden Mischereinsatz) einzelne Verwirbelungselemente unbrauchbar geworden sind.

Denn der erfindungsgemäße Mischereinsatz ist zum Einsatz in eine rohrförmige Durchleitung einer Mischvorrichtung angepasst, die mit mindestens zwei Komponenten-Zuleitungen in irgendeiner mittelbaren oder unmittelbaren Leitungsverbindung steht. Durch die Komponenten-Zuleitungen lassen sich jeweils eine fluide Komponente in die rohrförmige Durchleitung ein- und dann durch diese hindurch leiten. Der erfindungsgemäße Mischereinsatz ist zum Beispiel so angepasst, dass er mindestens einen (von den Komponenten durchflossenen) Querschnitt der Durchleitung mit seinen Verwirbelungselementen durchkreuzt oder er mit seinen Verwirbelungselementen in mindestens einen solchen Querschnitt der Durchleitung hineinragt. Die dort hindurch strömenden Fluide werden dann strömungsmechanisch zum Beispiel um- und/oder ablenkt, lokal gestaut, Turbulenzen werden in ihnen erzeugt und/oder sie werden verwirbelt - und somit durchmischt. Das Trägerstabelement dient dabei dazu, die Verwirbelungselemente zu dem Bauteil des Mischereinsatzes zu vereinen.

Fluide im erfindungsgemäßen Sinne bedeutet übrigens fließfähiges Material im allerweitesten Sinne, also nicht nur flüssig und/oder gasförmig, sondern auch körnig wie zum Beispiel Sand oder sogar ein in Korngröße und/oder -material inhomogenes Gemisch. Auch äußerst hochviskose Flüssigkeiten sind Fluide im erfindungsgemäßen Sinne (wie durch den schon eingeführten Begriff "pastös" bereits angedeutet), denn auch dafür sind Vorrichtungen technisch verfügbar und mit der Erfindung einsetzbar, die (zum Beispiel durch geeignet hohen Druck) hochviskose Fluidströmung erzeugen. Auch ist es im erfindungsgemäßen Sinne, mit dem Mischereinsatz Fluide nicht nur aus unterschiedlichem Material zu mischen.

Sondern die mindestens zwei Komponenten können auch Paarungen beliebig verschiedener der hier umschriebenen Fluidbeschaffenheiten sein, also nur zum Beispiel eine flüssige und eine körnige Komponente. Auch wird daraus deutlich, dass der erfindungsgemäße Mischereinsatz keineswegs nur zum Mischen von Komponenten zum Herstellen von Kunststoff verwendbar ist, sondern zum Mischen jeglicher der hier umschriebenen Fluidarten zu einem beliebigen technischen Zweck.

Vorzugsweise weist der erfindungsgemäße Mischereinsatz wie schon angedeutet mindestens ein Verwirbelungselement mit einer Fluid-Schaufel auf, die so ausgebildet ist, dass sie auf die Strömungsrichtung von vorbeiströmendem Fluid so einwirkt, dass mindestens ein Strömungsfaden spiralförmig an mindestens einem Abschnitt des Verwirbelungselements und insbesondere am Trägerstabelement entlang oder sogar um es herum fließt.

Vorzugsweise hat das erfindungsgemäße Verwirbelungselement mindestens zwei Schaufeln, die von dem Verwirbelungselement vorspringend gleichmäßig auf einem Umfang um das Verwirbelungselement herum verteilt sind. Diese Schaufeln können so ausgerichtet sein, dass sie auf die Strömung in dieselbe spiralförmige Richtung einwirken oder auch (auch abschnittsweise) in verschiedene.

Der erfindungsgemäße Mischereinsatz, und zwar erfindungsgemäß mindestens eines der Verwirbelungselemente ist angepasst, bezüglich der Durchleitung drehfest in die Durchleitung der schon erwähnten Mischvorrichtung einsetzbar zu sein. Der erfindungsgemäße Mischereinsatz kann aber auch an einen Drehantrieb der Mischvorrichtung ansetzbar sein, der in der Lage ist, den Mischereinsatz in der Durchleitung in Drehung zu versetzen. Dies kann zunächst von der Mischmaschine abhängen, an die der Mischereinsatz angepasst ist - ob diese nämlich einen Drehantrieb überhaupt aufweist und nicht vielleicht nur mit einer drehfesten Halterung für den erfindungsgemäßen Mischereinsatz zum sogenannten "statischen" Mischen eingerichtet ist.

Eine bevorzugte Ausgestaltung des erfindungsgemäßen Mischereinsatzes sieht aber auch vor, dass der erfindungsgemäße Mischereinsatz, und zwar insbesondere dessen erfindungsgemäßes Trägerstabelement, angepasst ist, bezüglich der Durchleitung drehbar an den Drehantrieb der Mischvorrichtung ansetzbar und in deren Durchleitung einsetzbar zu sein (zum sogenannten "dynamischen" Mischen) - wobei aber erfindungsgemäß mindestens ein Verwirbelungselement angepasst ist, drehfest bezüglich der Durchleitung in diese einsetzbar zu sein.

So ist der Mischereinsatz dann ausgebildet, dass das mindestens eine drehfeste Verwirbelungselement sich nicht mitdreht, sondern erfindungsgemäß mittels einer balligen Außenkontur drehfest in der Durchleitung gehalten ist, während zum Beispiel benachbarte Verwirbelungselemente drehfest auf dem Trägerstabelement montierbar sind und so (vom drehangetriebenen Trägerstabelement mitgenommen) in der Durchleitung in Drehung versetzt sind. Die drehfeste Montierbarkeit dieser Verwirbelungselemente auf dem Trägerstabelement erfolgt formschlüssig (zum Beispiel auch mittels Sechskantquerschnitt oder Passfeder oder Abflachung) und/oder kraftschlüssig (zum Beispiel auch durch Gewindekonterung).

In Drehung versetzte Verwirbelungselemente erzeugen in der Durchleitung zum Beispiel einen spiralförmig um das Trägerstabelement herum fließenden Fluidstrom, während drehfeste Verwirbelungselemente die Fluidflussrichtung drastisch und abrupt ändern können. Dazu können sie zum Beispiel auch mit Fluidleitflächen ausgebildet sein, die das Fluid zum Beispiel in axialer Richtung des Mischereinsatzes, des Trägerstabelementes und/ oder der Durchleitung leiten.

Dies hat sich als besonders wirkungsvoll für die Durchmischung der Komponenten herausgestellt. Es erlaubt vorteilhaft, den Mischwirkungsgrad zu erhöhen - oder die Strecke, auf der die Fluidkomponenten in der Durchleitung der Mischvorrichtung entlang dem Mischereinsatz vermischt werden, bei gleichem Mischwirkungsgrad zu verkürzen - und somit auch den Mischereinsatz, was vorteilhaft zum Beispiel zu Bauraumeinsparung in der Mischvorrichtung und Materialeinsparung bei der Herstellung des Mischereinsatzes führt.

Diese und weitere Vorteile und Merkmale der Erfindung werden anhand der folgenden Abbildungen von Ausführungsbeispielen der Erfindung weiter beschrieben. Darin zeigen
- Fig. 1: eine räumliche Explosionsdarstellung eines erfindungsgemäßen Mischereinsatzes,
- Fig. 2: eine räumliche Ansicht des Mischereinsatzes nach Fig. 1,
- Fig. 3: eine Seitenansicht des Mischereinsatzes nach Fig. 1, in einer Mischer-Durchleitung,
- Fig. 4: eine räumliche Explosionsdarstellung eines alternativen erfindungsgemäßen Mischereinsatzes,
- Fig. 5: eine räumliche Ansicht des Mischereinsatzes nach Fig. 4,
- Fig. 6: eine Seitenansicht des Mischereinsatzes nach Fig. 4 und
- Fig. 7 a und b: je eine Vorderansicht der ersten beiden Verwirbelungselemente des Mischereinsatzes nach Fig. 4.

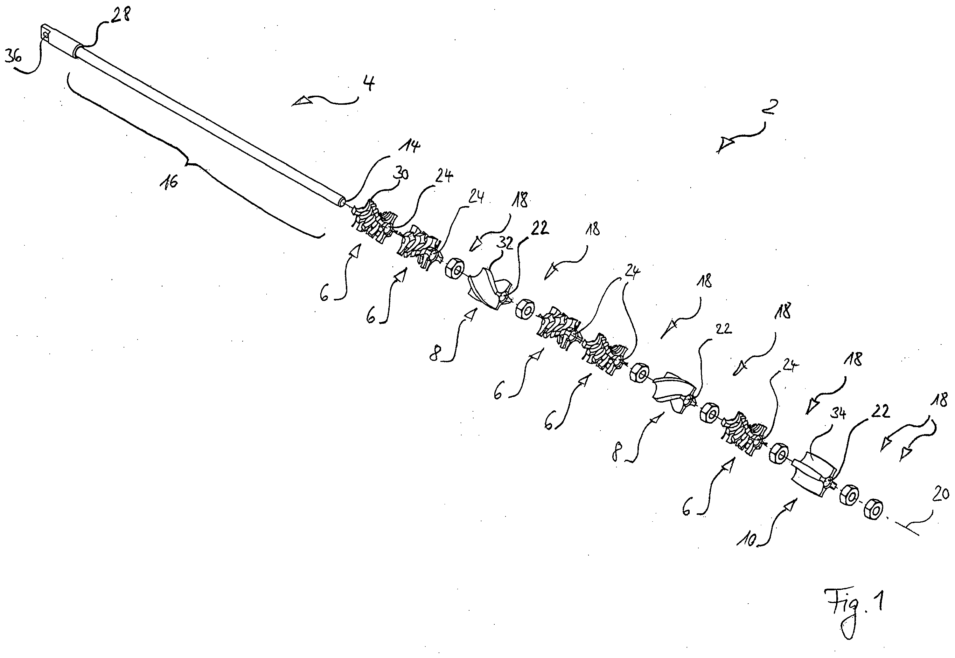

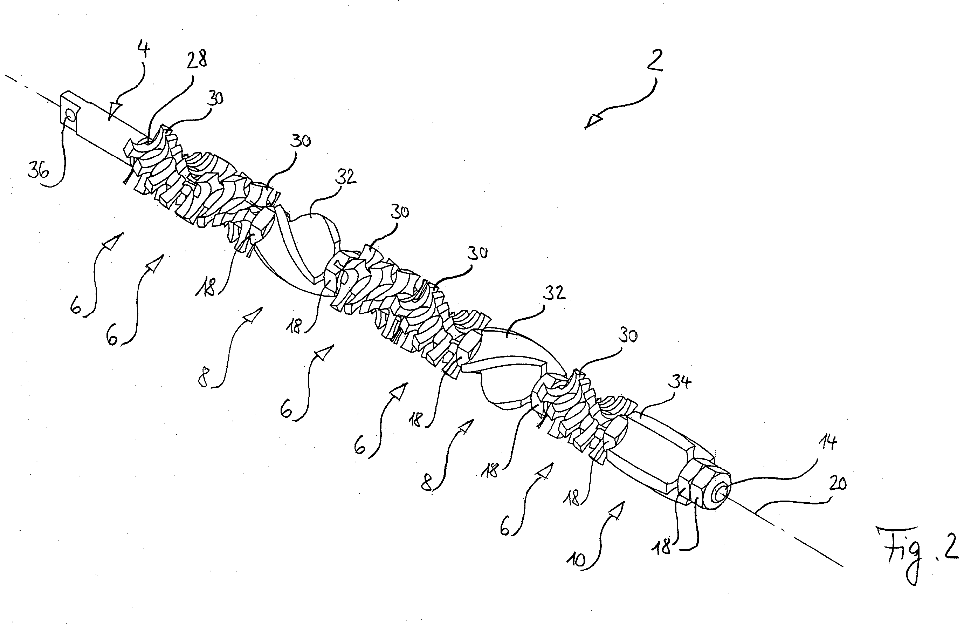

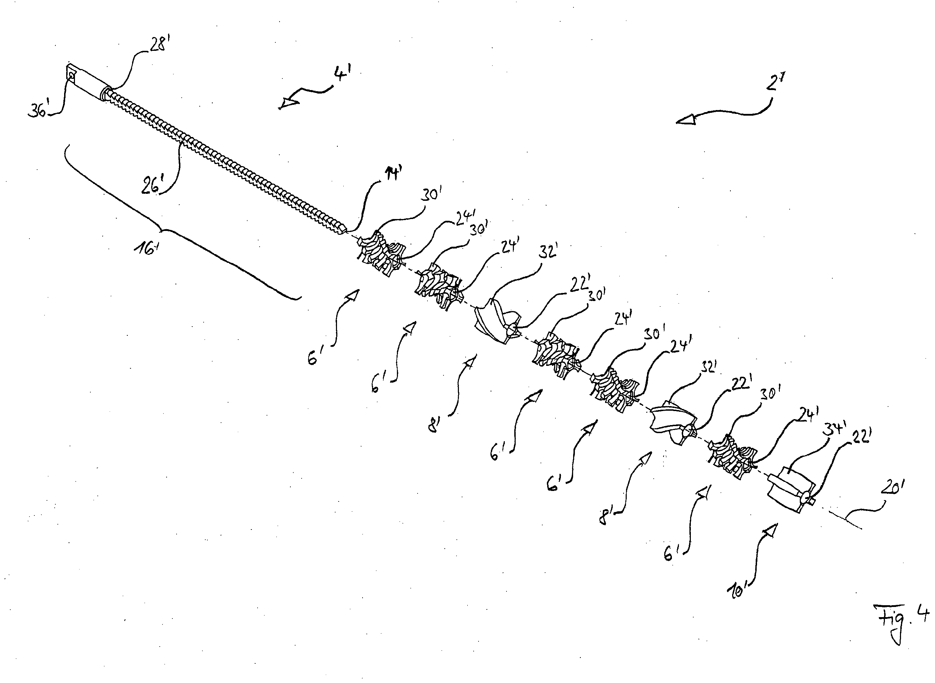

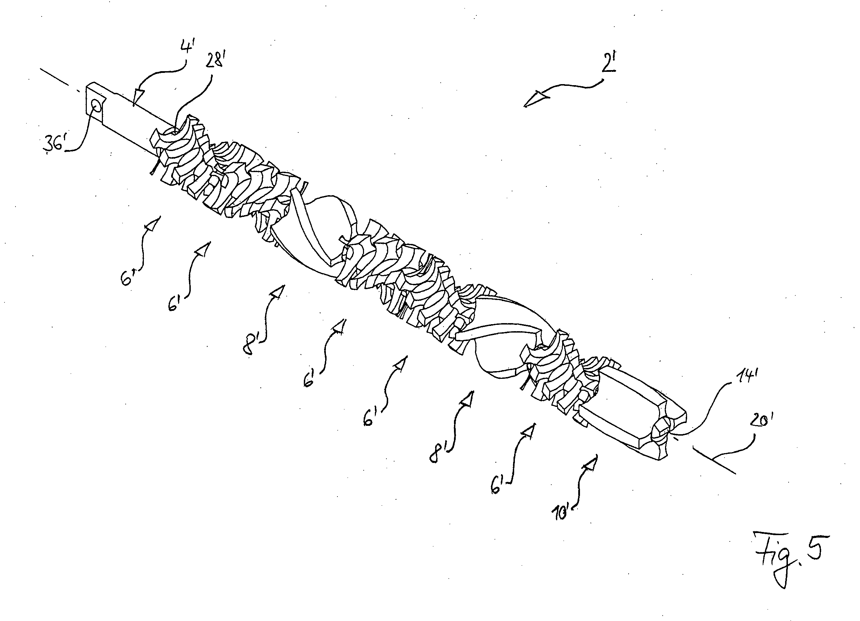

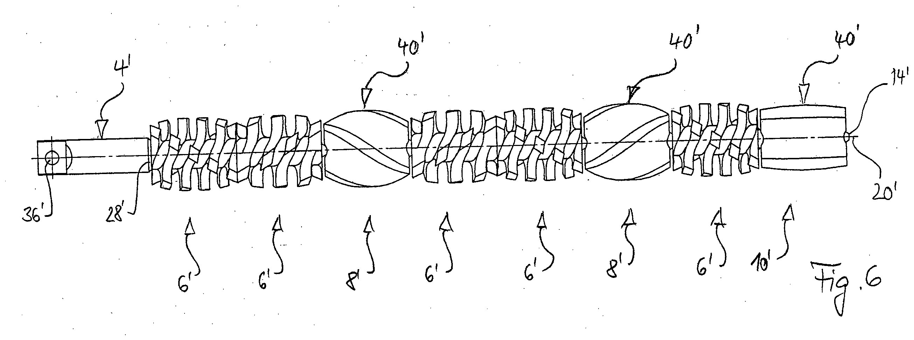

Fig. 1 bis 3 sowie Fig. 4 bis 6 zeigen je einen Mischereinsatz (2, 2' - die mit einem Hochkomma ' ergänzten Bezugsziffern beziehen sich auf Fig. 4 bis 7). Beide Mischereinsätze 2, 2' weisen ein Trägerstabelement 4, 4' mit acht Verwirbelungselementen 6 bis 10, 6' bis 10' auf, die an dem Trägerstabelement 4, 4' montierbar sind.

Das Trägerstabelement 4 und die Verwirbelungselemente 6 bis 10 bestehen zum Beispiel aus rostfreiem Stahl. Das Trägerstabelement 4' und die Verwirbelungselemente 6' bis 10' sind zum Beispiel im Spritzgussverfahren zum Beispiel aus POM hergestellt. Beliebige andere gegen die Mischkomponenten chemisch und mechanisch resistente Werkstoffe, - kombinationen und Beschichtungen sind erfindungsgemäß möglich.

Das Trägerstabelement 4, 4' ist länglich und gerade und erstreckt sich entlang einer geraden Achse 20, 20'.

Die Verwirbelungselemente 6 bis 10, 6' bis 10' sind um das Trägerstabelement 4, 4' herum angeordnet. Dazu sind die Verwirbelungselemente 6 bis 10 auf das Trägerstabelement 4, das von einem 14 seiner Enden über ein Großteil seiner Länge als Gewindestange 16 ausgebildet ist, montiert, nämlich zunächst (gegen einen Absatz 28) aufgesteckt. Einige Verwirbelungselemente 6 sind dann durch Muttern 18 auf dem Gewindestangenabschnitt 16 des Trägerstabelements 4 gekontert.

Auch die Verwirbelungselemente 6' bis 10' sind auf das Trägerstabelement 4' durch Aufstecken (gegen einen Absatz 28') montiert - dann aber durch Widerhaken 16', die von einem 14' seiner Enden auf einem Großteil der Länge des Trägerstabelements 4' ausgebildet sind, gegen axiales Zurückrutschen gesichert.

Damit die Verwirbelungselemente 6 bis 10, 6' bis 10' auf das Trägerstabelement 4, 4' durch Aufstecken montierbar sind, haben sie Durchgangsöffnungen 22, 22', 24, 24' durch die das Trägerstabelement 4, 4' hindurch passt.

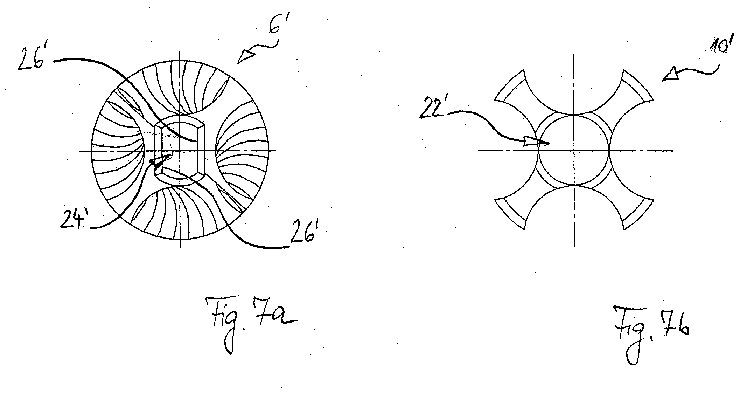

Einige der Verwirbelungselemente 8, 10, 8', 10' sind auf dem Trägerstabelement 4, 4' drehbar montiert. Dazu sind die Durchgangsöffnungen 22, 22' der Verwirbelungselemente 8, 10, 8', 10' als kreiszylindrische Durchbohrungen ausgebildet, die auf den vorgesehenen Abschnitt 16, 16' in Spielpassung aufsteckbar sind. Die kreiszylindrische Durchgangsöffnung 22' des Verwirbelungselements 10' ist in Fig. 7b erkennbar.

Einige der Verwirbelungselemente 6, 6' dagegen sind auf dem Trägerstabelement 4, 4' schließlich drehfest montiert. Die Durchgangsöffnungen 24 der Verwirbelungselemente 6 sind zwar auch als kreiszylindrische Durchbohrungen ausgebildet. Für die drehfeste Montage sind diese Verwirbelungselemente 6 aber (zum Teil paarweise) zwischen zwei Muttern 18 gekontert. Die Durchgangsöffnungen 24' der Verwirbelungselemente 6' dagegen sind - wie in komplementärer Querschnittsgestalt auch der Widerhakenabschnitt 16' des Trägerstabelements 4' - mit seitlichen Abflachungen 26' ausgebildet (Die Durchgangsöffnung 24' des Verwirbelungselements 6' mit ihren seitlichen Abflachungen 26' ist in Fig. 7a erkennbar). Für die drehfeste Montage brauchen diese Verwirbelungselemente 6' also nur (wie schon beschrieben) auf den Widerhakenabschnitt 16' des Trägerstabelements 4' aufgesteckt zu werden. Die Formschlüssigkeit 26' sorgt dann für die Drehfestigkeit. Die Wiederhaken 16' (die sich mit Übergangs- oder Presspassung in die mit einer passenden Rauigkeit versehenen Wandungen der Durchgangsöffnungen 24' der Verwirbelungselemente 6' setzen) für die axiale Sicherung in einem Richtungssinn. In dem anderen Richtungssinn sind die Verwirbelungselemente 6' axial gegen einen Absatz 28' am Trägerstabelement 4' gesichert.

Die Verwirbelungselemente 6 bis 10, 6' bis 10' weisen auf einigen Ihrer Umfänge jeweils vier Fluid-Schaufeln 30 bis 34, 30' bis 34' auf, die von dem jeweiligen Verwirbelungselement 6 bis 10, 6' bis 10' vorspringend gleichmäßig auf dem jeweiligen Umfang um das Verwirbelungselement 6 bis 10, 6' bis 10' herum verteilt sind (nämlich zueinander um 90° um die Achse 20, 20' verdreht).

Die Fluid-Schaufeln 30 bis 34, 30' bis 34' sind so geformt und ausgerichtet, dass sie Flächen aufweisen, die auf die Strömungsrichtung von vorbeiströmendem Fluid (nicht dargestellt) richtungsweisend einwirken - und zwar die Fluid-Schaufeln 30, 32, 30', 32' so, dass Strömungsfäden (nicht dargestellt) von vorbeifließender Fluidströmung (nicht dargestellt) im Wesentlichen spiralförmig um die Rotationsachse 20, 20' herum am Mischereinsatz 2, 2'entlang geleitet würden. Nur die Fluid-Schaufeln 34, 34' sind so ausgerichtet, dass sie Strömungsfäden (nicht dargestellt) von vorbeifließender Fluidströmung (nicht dargestellt) im Wesentlichen in Richtung der Achse 20, 20' axial am Mischereinsatz 2, 2' entlang leiten.

Die vier (auf dem jeweiligen Umfang um das jeweilige Verwirbelungselement 8, 10, 8', 10' herum verteilten) Fluid-Schaufeln 32, 34, 32', 34' sind in Richtung der Achse 20, 20' über die gesamte Länge des jeweiligen Verwirbelungselements 8, 10, 8', 10' einstückig durchgehend geformt. Dagegen sind die vier (auf dem jeweiligen Umfang um das jeweilige Verwirbelungselement 6, 6' herum verteilten) Fluid-Schaufeln 30, 30' in Richtung der Achse 20, 20' über die gesamte Länge des jeweiligen Verwirbelungselements 6, 6' mehrfach unterbrochen und die axial nebeneinander stehenden Umfangsvierergruppen zueinander um die Achse 20, 20' verdreht geformt.

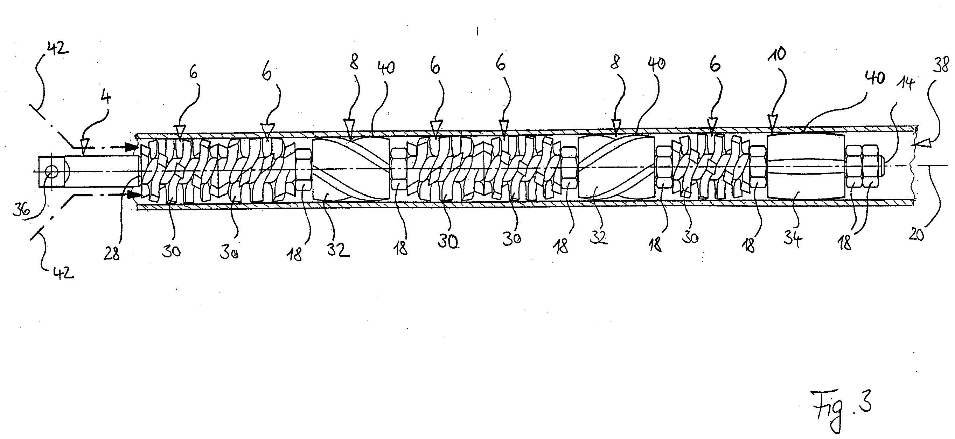

Der Mischereinsatz 2, 2' ist durch seine kreiszylindermantelförmige Außenkontur (die von den radialen Außenkonturen der Schaufeln 30 bis 34, 30' bis 34' gebildet wird) angepasst, gemäß Fig. 3 in eine kreiszylinderrohrförmige Durchleitung 38 (einer nicht dargestellten Mischvorrichtung) einsetzbar zu sein, die mit zwei Komponenten-Zuleitungen (schematisch sind nur deren Mittellinien 42 mit Pfeilspitzen in die Zuleitungsrichtung dargestellt) in Leitungsverbindung steht. Durch die Komponenten-Zuleitungen lassen sich zum Beispiel mittels Pumpe jeweils eine fluide Komponente in die rohrförmige Durchleitung ein- und dann durch diese hindurch leiten. Der Mischereinsatz 2 ist dabei so angepasst, dass er entlang seiner länglichen Erstreckungsrichtung in Richtung der Achse 20 im Abschnitt jeweils eines der Verwirbelungselemente 6 bis 10, 6' bis 10' jeweils einen (von den Komponenten durchflossenen) Querschnitt der Durchleitung mit seinen Schaufeln 30 bis 34, 30' bis 34' durchkreuzt. Die dort hindurch strömenden Fluide werden dann strömungsmechanisch um- und ablenkt, lokal gestaut, Turbulenzen werden in ihnen erzeugt und sie werden verwirbelt - und somit durchmischt.

Der Mischereinsatz 2, 2' ist durch eine Radialbohrung 36 angepasst, in der Durchleitung 38 einer Mischvorrichtung (nicht dargestellt) an einen Drehantrieb (nicht dargestellt) ansetzbar zu sein (nämlich an eine Drehantriebswelle (nicht dargestellt) mit in die Radialbohrung 36 passendem Haken (nicht dargestellt) eingehakt zu werden) und um die Rotationsachse 20, 20' drehend angetrieben zu werden.

Die Schaufelelemente 30, 30' der (auf dem Trägerstabelement 4, 4' drehfesten) Verwirbelungselemente 6, 6' durchkämmen drehangetrieben die vorbeiströmenden Fluidkomponenten (nicht dargestellt) wie Turbinenschaufeln in der Durchleitung 38 und versetzen die Fluidkomponenten in Drehung um die Rotationsachse 20, 20'. Die Schaufelelemente 32, 34, 32', 34' der (auf dem Trägerstabelement 4, 4' drehbaren) Verwirbelungselemente 8, 10, 8', 10' dagegen weisen eine ballige radiale Außenkontur 40, 40' auf, die in Übergangs- oder Presspassung in die Durchleitung 38 einsetzbar ist und - darin - dann drehfest gehalten wird (sich also - auf dem Trägerstabelement 4, 4' drehbar - mit diesem und den benachbarten Verwirbelungselementen 6, 6' eben nicht mitdreht). Dies beendet die Drehung der Fluidkomponenten um die Rotationsachse 20, 20' in den Abschnitten der (auf dem Trägerstabelement 4, 4' drehbaren) Verwirbelungselemente 8, 10, 8', 10' abrupt - und sorgt insbesondere an den Übergangsstellen zwischen (auf dem Trägerstabelement 4, 4' drehbaren) Verwirbelungselementen 8, 10, 8', 10' und (auf dem Trägerstabelement 4, 4' drehfesten) Verwirbelungselementen 6, 6' für maximale Durchmischung der durch den Mischereinsatz 2, 2' hindurch strömenden Fluidkomponenten.

### Bezugsziffern

Mischereinsatz 2, 2'
Trägerstabelement 4, 4'
Verwirbelungselementen 6 bis 10, 6' bis 10'
Achse 20, 20'
Trägerstabelement-Ende 14, 14'
Gewindestange 16
Absatz 28, 28'
Muttern 18
Widerhaken 16'
Durchgangsöffnungen 22, 22', 24, 24'
Fluid-Schaufeln 30 bis 34, 30' bis 34'
Durchleitung 38
Komponenten-Zuleitungen-Mittellinien 42
Radialbohrung 36
ballige Außenkontur 40, 40

## Patentansprüche

1. Mischereinsatz (2, 2'), der Verwirbelungselemente (6 bis 10, 6' bis 10') und für die Verwirbelungselemente ein Trägerstabelement (4, 4') aufweist und der zum Einsatz in eine rohrförmige Durchleitung (38) angepasst ist, die mit mindestens zwei Komponenten-Zuleitungen (42) einer Vorrichtung zum Mischen mindestens zweier fluider Komponenten in Leitungsverbindung steht, wobei die Verwirbelungselemente an das Trägerstabelement montiert sind, wobei mindestens eines der Verwirbelungselemente (6 bis 10, 6' bis 10') am Trägerstabelement (4, 4') drehfest angebracht ist, wobei mindestens eines der Verwirbelungselemente (6 bis 10, 6' bis 10') sich nicht mit dem Trägerstabelement (4, 4') mitdreht, sondern zum drehfesten Einsatz in die rohrförmige Durchleitung (38) angepasst ist,
**dadurch gekennzeichnet, dass**
das mindestens eine zum drehfesten Einsatz in die rohrförmige Durchleitung (38) angepasste Verwirbelungselement (6 bis 10, 6' bis 10') mittels einer balligen Außenkontur (40) angepasst ist, sich in einer Innenkontur der rohrförmigen Durchleitung kraftschlüssig, insbesondere reibschlüssig, und/oder formschlüssig zu halten.

2. Mischereinsatz nach dem vorhergehenden Anspruch, **dadurch gekennzeichnet, dass** das Trägerstabelement (4, 4') angepasst ist, an einen Drehantrieb der Vorrichtung zum Mischen ansetzbar in die Durchleitung (38) einsetzbar zu sein.

3. Mischereinsatz nach Anspruch 2, **dadurch gekennzeichnet, dass** das Trägerstabelement (4, 4') länglich ist und dass der Drehantrieb angepasst ist, den Mischereinsatz (2, 2') um eine Drehachse (20, 20'), die in der länglichen Erstreckungsrichtung des Trägerstabelements verläuft, drehend anzutreiben.

4. Mischereinsatz nach einem der vorhergehenden Ansprüche, **dadurch gekennzeichnet, dass** mindestens ein Verwirbelungselement (6 bis 10, 6' bis 10') mindestens zwei Fluid-Schaufeln (30 bis 34, 30' bis 34') aufweist, die von dem Verwirbelungselement vorspringend gleichmäßig auf dem Umfang des Verwirbelungselementes verteilt sind.

5. Mischereinsatz nach einem der vorhergehenden Ansprüche, **dadurch gekennzeichnet, dass** mindestens ein Verwirbelungselement (6 bis 10, 6' bis 10') eine Fluid-Schaufel (30 bis 32, 30' bis 32') aufweist, die ausgebildet ist, Fluid spiralförmig um das Trägerstabelement (4, 4') herum zu leiten.

6. Mischereinsatz nach Anspruch 5, **dadurch gekennzeichnet, dass** mindestens zwei Verwirbelungselemente (6 bis 10, 6' bis 10') je eine Fluid-Schaufel 30 bis 32, 30' bis 32' aufweisen, die ausgebildet sind, Fluid spiralförmig in zueinander entgegengesetzter Richtung um das Trägerstabelement (4, 4') herum zu leiten.

## Claims

1. Mixer insert (2, 2') which comprises turbulence elements (6 to 10, 6' to 10') and a carrier rod element (4, 4') for the turbulence elements, and which is adapted to be inserted into a tubular through-pipe (38) which is connected in line with at least two component feed lines (42) of a device for mixing at least two fluid components, wherein the turbulence elements are mounted on the carrier rod element,
wherein at least one of the turbulence elements (6 to 10, 6' to 10') is attached non-rotatably to the carrier rod element (4, 4'),
wherein at least one of the turbulence elements (6 to 10, 6' to 10') does not rotate along with the carrier rod element (4, 4'), but is adapted to be inserted non-rotatably in the tubular through-pipe (38),
**characterised in that**
the at least one turbulence element (6 to 10, 6' to 10') adapted to be inserted non-rotatably in the tubular through-pipe (38) is adapted by means of a convex outer contour (40) to be held in an inner contour of the tubular through-pipe in a force-locking manner, in particular in a frictionally-locking and/or form-locking manner.

2. Mixer insert according to the preceding claim, **characterised in that** the carrier rod element (4, 4') is adapted to be insertable in the through-pipe (38) while being attachable to a rotary drive of the mixing device.

3. Mixer insert according to claim 2, **characterised in that** the carrier rod element (4,4') is elongated and that the rotary drive is adapted to drive the mixer insert (2, 2') so as to rotate around an axis of rotation (20, 20') which runs in the direction of longitudinal extension of the carrier rod element.

4. Mixer insert according to one of the preceding claims, **characterised in that** at least one turbulence element (6 to 10, 6' to 10') has at least two fluid blades (30 to 34, 30' to 34') which, projecting from the turbulence element, are arranged equidistantly around the circumference of the turbulence element.

5. Mixer insert according to one of the preceding claims, **characterised in that** at least one turbulence element (6 to 10, 6' to 10') has a fluid blade (30 to 32, 30' to 32') which is configured to direct fluid spirally around the carrier rod element (4, 4').

6. Mixer insert according to claim 5, **characterised in that** at least two turbulence elements (6 to 10, 6' to 10') each have a fluid blade 30 to 32, 30' to 32' which are configured to direct fluid spirally around the carrier rod element (4, 4) in opposite directions.

## Revendications

1. Élément mélangeur (2, 2'), qui présente des éléments de tourbillonnement (6 à 10, 6' à 10') et un élément de barre de support (4, 4') pour les éléments de tourbillonnement et qui est adapté pour être inséré dans un passage tubulaire (38), qui est en raccordement de conduite avec au moins deux conduites d'amenée de composants (42) d'un dispositif de mélange d'au moins deux composants fluides, dans lequel les éléments de tourbillonnement sont montés au niveau de l'élément de barre de support,
dans lequel au moins un des éléments de tourbillonnement (6 à 10, 6' à 10') est monté solidaire en rotation au niveau de l'élément de barre de support (4, 4'),
dans lequel au moins un des éléments de tourbillonnement (6 à 10, 6' à 10') n'est pas emmené en rotation avec l'élément de barre de support (4, 4'), mais est adapté pour être inséré solidaire en rotation dans le passage tubulaire (38),
**caractérisé en ce que**
l'au moins un élément de tourbillonnement (6 à 10, 6' à 10') adapté pour être inséré solidaire en rotation dans le passage tubulaire (38) est adapté au moyen d'un contour extérieur bombé (40) pour se maintenir par force, en particulier par friction, et/ou par complémentarité de forme dans un contour intérieur du passage tubulaire.

2. Élément mélangeur selon la revendication précédente, **caractérisé en ce que** l'élément de barre de support (4, 4') est adapté pour pouvoir être inséré dans le passage tubulaire (38) de manière à pouvoir être appliqué sur un entraînement rotatif du dispositif de mélange.

3. Élément mélangeur selon la revendication 2, **caractérisé en ce que** l'élément de barre de support (4, 4') est oblong et que l'entraînement rotatif est adapté pour entraîner l'élément mélangeur (2, 2') en rotation autour d'un axe de rotation (20, 20'), qui s'étend dans la direction d'extension longitudinale oblongue de l'élément de barre de support.

4. Élément mélangeur selon l'une quelconque des revendications précédentes, **caractérisé en ce qu'**au moins un élément de tourbillonnement (6 à 10, 6' à 10') présente au moins deux aubes de fluide (30 à 34, 30' à 34'), qui sont réparties uniformément sur la périphérie de l'élément de tourbillonnement en saillie de l'élément de tourbillonnement.

5. Élément mélangeur selon l'une quelconque des revendications précédentes, **caractérisé en ce qu'**au moins un élément de tourbillonnement (6 à 10, 6' à 10') présente une aube de fluide (30 à 32, 30' à 32'), qui est réalisée pour conduire du fluide en spirale autour de l'élément de barre de support (4, 4').

6. Élément mélangeur selon la revendication 5, **caractérisé en ce qu'**au moins deux éléments de tourbillonnement (6 à 10, 6' à 10') présentent chacun une aube de fluide 30 à 32, 30' à 32', qui sont réalisées pour conduire du fluide en spirale dans une direction opposée l'une l'autre autour de l'élément de barre de support (4, 4').
